# EUROPÄISCHE PATENTSCHRIFT

(11) **EP 2 745 796 B1**
(45) Veröffentlichungstag und Bekanntmachung des Hinweises auf die Patenterteilung: **21.03.2018**
(21) Anmeldenummer: 12198790.3
(22) Anmeldetag: 21.12.2012
(51) Int. Cl.: A61C 3/03, A61C 8/00

(54) **Schallwerkzeug zum Trennen zweier unterschiedlicher Gewebe**
Sonic tool for the separation of two different tissues
Instrument sonique destiné à séparer deux tissus différents

(43) Veröffentlichungstag der Anmeldung: 25.06.2014
(73) Patentinhaber: W & H Dentalwerk Bürmoos GmbH, 5111 Bürmoos (AT)
(72) Erfinder: BRANDSTÄTTER, Andreas, 5120 St. Pantaleon (AT); LETTE, Andreas, 4050 Traun (AT)
(74) Vertreter: Benda, Ralf

(56) Entgegenhaltungen:
- DE-A1-102005 009 802
- US-A- 5 531 597
- US-A1- 2011 098 633
- US-A1- 2011 229 845

## Beschreibung

Die vorliegende Erfindung betrifft ein durch Schall, insbesondere Ultraschall, antreibbares, insbesondere dentales, Werkzeug zum Trennen zweier unterschiedlicher Gewebe, bevorzugt zum Trennen einer Membran von einem Knochen, zur Präparation einer Implantationsstelle.

Ein derartiges Werkzeug ist aus der Patentanmeldung WO 2009/157621 A1 bekannt. Das Werkzeug weist ein Anschlussteil zur Verbindung des Werkzeugs mit einer Schallquelle und mit einer Flüssigkeitsquelle, einen Arbeitsabschnitt und einen den Anschlussteil mit dem Arbeitsabschnitt verbindenden Schaft mit einer Flüssigkeitsleitung auf. Der Arbeitsabschnitt umfasst mehrere Klingen. Das Werkzeug wird zum Abtragen von Knochengewebe des Kiefers durch die Klingen und zum Lösen der Schneiderschen Membran von dem Knochengewebe verwendet. Das Lösen der Membran erfolgt durch die Abgabe von Flüssigkeit von dem Arbeitsabschnitt in Richtung der Membran, wobei der Druck der Flüssigkeit die Membran von dem Knochengewebe lösen soll.

Die Patentanmeldung US 2011/0229845 A1 offenbart mehrere durch Schall antreibbare, nicht gattungsgemäße Werkzeuge zum Schneiden oder Bohren oder zum Verdichten von Knochenmaterial mit einer Vielzahl von Schneidelementen an der Endfläche und an der Umfangswand. Des Weiteren ist ein Werkzeug zum Ablösen einer Membran von einem Knochen mit einer einzigen Öffnung an der Endfläche zur Abgabe einer Kühlflüssigkeit beschrieben.

Die Patentanmeldung US 2011/0098633 A1 offenbart ein durch Schall antreibbares Werkzeug zum Ablösen einer Membran von einem Knochen mittels Kavitation und ohne Kontakt des Werkzeugs mit der Membran.

Die Patentanmeldung DE 10 2005 009 802 A1 beschreibt ein durch Schall antreibbares Werkzeug zum Ablösen einer Membran von einem Knochen mit einer einzigen, zentralen Öffnung zur Abgabe einer Flüssigkeit.

Aufgrund der außerordentlichen Dünnheit der Membran ist beim Lösen der Membran von dem Knochengewebe äußerste Vorsicht geboten. Ein Reißen der Membran ist unter allen Umständen zu vermeiden. Bei den aus dem Stand der Technik bekannten Werkzeugen besteht aufgrund ihrer Form, ihres Aufbaus und / oder aufgrund der Weise, wie das Werkzeug zu verwenden ist, entweder die Gefahr, dass beim Lösen der Membran von dem Knochengewebe die Membran reißt oder dass das Lösen der Membran von dem Knochengewebe nur mühevoll und / oder unter suboptimalen Bedingungen erreichbar ist.

Der vorliegenden Erfindung liegt daher die Aufgabe zugrunde ein durch Schall oder Ultraschall antreibbares, insbesondere dentales, Werkzeug zum Trennen zweier unterschiedlicher Gewebe, bevorzugt zum Trennen einer Membran von einem Knochen, zur Präparation einer Implantationsstelle zu schaffen, das die im Vorstehenden genannten Nachteile nicht hat. Das Werkzeug soll insbesondere derart beschaffen sein, dass die Gefahr des Reißens oder Beschädigens der Membran beim Lösen von dem Knochengewebe möglichst gering ist. Das Werkzeug soll vorzugsweise auch derart beschaffen sein, dass das Lösen der Membran von dem Knochengewebe für den Anwender einfacher, schneller oder sicherer durchzuführen ist.

Diese Aufgabe wird gemäß der vorliegenden Erfindung durch ein durch Schall oder Ultraschall antreibbares, insbesondere dentales, Werkzeug zum Trennen zweier unterschiedlicher Gewebe, bevorzugt zum Trennen einer Membran von einem Knochen, insbesondere zum Lösen der Schneiderschen Membran von dem Knochengewebe des Kieferknochens, zur Präparation einer Implantationsstelle, nach Anspruch 1, eine Behandlungsvorrichtung gemäß Anspruch 12 und ein Verfahren zur Herstellung eines Werkzeugs gemäß Anspruch 13 gelöst. Ein Vorteil des erfindungsgemäßen Werkzeugs besteht darin, dass aufgrund des stumpfen und gerundeten Außenumfangs der Umfangswand des Arbeitsabschnitts die Gefahr des Reißens oder Beschädigens der Membran erheblich verringert ist. Bevorzugt kann damit das Lösen der Membran von dem Knochengewebe nicht oder nicht nur durch die abgegebene Flüssigkeit sondern (auch) durch direkten Kontakt des Arbeitsabschnitts des Werkzeugs, insbesondere der Umfangswand mit dem stumpfen und gerundeten Außenumfang, mit der Membran und / oder mit dem Knochengewebe bewirkt werden. Demgemäß ist / sind der Arbeitsabschnitt und / oder die Umfangswand vorzugsweise derart geformt und / oder ausgebildet, dass ein mechanisches Lösen der Membran von dem Knochengewebe durch direkten Kontakt des Arbeitsabschnitts, insbesondere der Umfangswand, mit der Membran und / oder mit dem Knochengewebe bewirkbar ist. Das Lösen der Membran von dem Knochengewebe durch direkten Kontakt des Arbeitsabschnitts, insbesondere der Umfangswand, mit der Membran und / oder mit dem Knochengewebe wird vorzugsweise durch das in Schwingung versetzen des Werkzeugs, insbesondere des Arbeitsabschnitts, durch die Schall- oder Ultraschallquelle unterstützt. Alternativ oder zusätzlich ist das Werkzeug derart ausgebildet, dass das Lösen der Membran von dem Knochengewebe durch Übertragen der Schwingungen von dem Werkzeug, insbesondere von dem Arbeitsabschnitt, auf oder über die abgegebene Flüssigkeit und auf die Membran bewirkt wird.

Ein weiterer Vorteil des erfindungsgemäßen Werkzeugs besteht darin, dass durch das Vorsehen der Endfläche, deren Außendurchmesser größer ist als der Außendurchmesser des Schafts, und durch das Vorsehen mehrerer Öffnungen zur Flüssigkeitsabgabe an oder auf der Endfläche ein Flüssigkeitsfilm erzeugbar ist, der ein sicheres Gleiten der Endfläche auf der Membran oder ein zuverlässiges Bewegen des Arbeitsabschnitts in Bezug auf die Membran, insbesondere während des Lösens der Membran von dem Knochengewebe, ermöglicht. Demgemäß sind die Endfläche und die Öffnungen zur Flüssigkeitsabgabe vorzugsweise derart ausgebildet, dass an oder auf der Endfläche ein Flüssigkeitsfilm erzeugbar ist.

Vorzugsweise ist zumindest ein Teil des Werkzeugs aus Metall gefertigt, insbesondere aus Stahl. Zur besseren Handhabung weist das Werkzeug, insbesondere der Schaft, vorzugsweise zumindest eine Biegung auf. Bevorzugt ist die Biegung derart ausgebildet, dass die Endfläche des Werkzeugs und eine Längsachse des Anschlussteils zur Verbindung des Werkzeugs mit einer Schallquelle und mit einer Flüssigkeitsquelle nicht in einem rechten Winkel zueinander angeordnet sind. Vorzugsweise ist an der Oberfläche des Werkzeugs, insbesondere des Anschlussteils, eine Schlüsselfläche zum Anbringen eines Instruments vorgesehen, welches das Verbinden des Werkzeugs mit der Schall- oder Ultraschallquelle unterstützt. Vorzugsweise ist eine Schwingachse oder Sonotrode vorgesehen, welche die Schall- oder Ultraschallquelle mit dem Werkzeug verbindet. Vorzugsweise ist das Werkzeug lösbar mit der Schall- oder Ultraschallquelle und / oder mit der Schwingachse oder Sonotrode verbindbar.

Vorzugsweise umfasst das Anschlussteil ein Verbindungselement zur, insbesondere lösbaren, Verbindung des Werkzeugs mit der Schall- oder Ultraschallquelle. Das Verbindungselement ist zum Beispiel als Gewinde ausgebildet. Vorzugsweise ist das Anschlussteil hohl oder hülsenartig ausgebildet. Vorzugsweise umfasst das Anschlussteil einen Innenraum mit einer Innenwand. Vorzugsweise ist das Verbindungselement, insbesondere das Gewinde, im Innenraum oder an der Innenwand des Anschlussteils vorgesehen. Vorzugsweise ist das Anschlussteil im Wesentlichen zylindrisch oder hohlzylindrisch ausgebildet. Vorzugsweise ist das Anschlussteil länglich ausgebildet und erstreckt sich entlang einer Mittelachse. Vorzugsweise bildet der Innenraum des Anschlussteils einen Teil der Flüssigkeitsleitung des Werkzeugs oder der Innenraum des Anschlussteils ist zur Leitung einer Flüssigkeit ausgebildet. Vorzugsweise ist der Innendurchmesser des Innenraums des Anschlussteils größer als der Innendurchmesser zumindest eines Abschnitts der Flüssigkeitsleitung in dem Schaft und / oder in dem Arbeitsabschnitt. Vorzugsweise ist der Außendurchmesser des Anschlussteils größer als der Außendurchmesser zumindest eines Abschnitts des Schafts. Vorzugsweise sind der Anschlussteil und der Schaft über einen sich in Richtung des Schafts verjüngenden Verbindungsabschnitt miteinander verbunden.

Vorzugsweise ist der Schaft gebogen ausgebildet, er kann jedoch auch im Wesentlichen gerade sein. Vorzugsweise ist der Schaft länglich ausgebildet und erstreckt sich entlang einer Mittelachse. Vorzugsweise verringert sich der Außendurchmesser des Schafts zumindest geringfügig in Richtung des Arbeitsabschnitts. Vorzugsweise umfasst der Schaft eine, insbesondere zentrische, Bohrung. Besonders bevorzugt ist die Bohrung des Schafts Teil der Flüssigkeitsleitung des Werkzeugs. Vorzugsweise ist die Bohrung des Schafts mit dem Innenraum des Anschlussteils verbunden, insbesondere flüssigkeitsübertragen verbunden. Vorzugsweise ist die Bohrung des Schafts mit den Öffnungen der Endfläche und / oder mit den den Öffnungen zugeordneten Zweigleitungen, insbesondere flüssigkeitsübertragen, verbunden.

Vorzugsweise umfasst die Flüssigkeitsleitung mehrere Abschnitte, zum Beispiel den Innenraum des Anschlussteils, die Bohrung des Schafts oder den Öffnungen zugeordnete Zweigleitungen. Vorzugsweise weist die Flüssigkeitsleitung unterschiedliche Innendurchmesser auf. Vorzugsweise ist der Innendurchmesser der Flüssigkeitsleitung zumindest in einem Abschnitt des Anschlussteils größer als in einem Teil des Schafts und / oder des Arbeitsabschnitts. Vorzugsweise ist die Flüssigkeitsleitung ausgebildet, eine Flüssigkeit an oder auf die Endfläche und / oder die Behandlungsstelle zu leiten. Die Flüssigkeitsleitung ist mit den Öffnungen der Endfläche verbunden oder endet in diesen Öffnungen.

Vorzugsweise ist der Außendurchmesser des Schafts geringer als 3,0 mm. Vorzugsweise ist der Außendurchmesser der Endfläche größer als 2,0 mm, insbesondere größer als 3,0 mm. Vorzugsweise ist der Außendurchmesser der Endfläche größer als der Außendurchmesser eines der Endfläche nahen oder unmittelbar an die Endfläche anschließenden Abschnitts des Schafts. Vorzugsweise ist die Höhe der Umfangswand geringer als 1,5 mm, insbesondere beträgt sie zwischen 1,2 mm und 0,5 mm. Vorzugsweise ist der Außendurchmesser der Umfangswand zumindest gleich groß wie der Außendurchmesser der Endfläche.

Gemäß einem Ausführungsbeispiel ist an dem Werkzeug, insbesondere an dem Arbeitsabschnitt, vorzugsweise an der Umfangswand, keine Schneide, keine Klinge oder kein abrasives Element vorgesehen. Damit wird ein vorteilhafter Weise die Gefahr einer Verletzung der zu trennenden Gewebe, insbesondere der Membran, erheblich verringert. Erfindungsgemäß weist die Endfläche des Werkzeugs mehrere Öffnungen auf, die mit der Flüssigkeitsleitung jeweils durch eine eigene Zweigleitung verbunden sind. Bevorzugt ist zumindest eine Öffnung der Endfläche außermittig angeordnet ist. Bevorzugt sind zumindest einige der Öffnungen gleichmäßig voneinander beabstandet und / oder im Wesentlichen gleich weit entfernt vom Mittelpunkt der Endfläche angeordnet. Diese Merkmale ermöglichen eine besonders effektive oder gleichmäßige Erzeugung eines Flüssigkeitsfilms an der Endfläche und / oder der Behandlungsstelle. Vorzugsweise sind die Zweigleitungen gewinkelt zu dem Schaft, insbesondere zu dem an den Arbeitsabschnitt anschließenden Abschnitt des Schafts, oder zu dem Abschnitt der Flüssigkeitsleitung angeordnet, von dem sie sich verzweigen. Vorzugsweise beträgt der Winkel zwischen der Mittelachse einer Zweigleitung und der Mittelachse dieses Flüssigkeitsabschnitts oder des Schafts, insbesondere der Mittelachse des an den Arbeitsabschnitt anschließenden Abschnitts des Schafts, in etwa zwischen 15° und 75°, insbesondere zwischen 25° und 50°, besonders bevorzugt in etwa 35°.

Vorzugsweise umfasst das Werkzeug eine im Wesentlichen runde, insbesondere kreisrunde, Endfläche und / oder eine im Wesentlichen runde, insbesondere kreisrunde, Umfangswand. Gemäß einem Ausführungsbeispiel ist / sind die Endfläche und / oder die Umfangswand mit dem Schaft durch einen sich in Richtung des Schafts verjüngenden Verbindungsabschnitt verbunden. Beide Merkmale ermöglichen eine besonders sichere und schonende Behandlung mit geringer Verletzungsgefahr der zu trennenden Gewebe, insbesondere der Membran.

Vorzugsweise erstreckt sich die Endfläche in einer Ebene, die im Wesentlichen rechtwinkelig zu zumindest einem Abschnitt des Schafts, insbesondere zu dem an den Arbeitsabschnitt anschließenden Abschnitt des Schafts, angeordnet ist. Damit ist die Handhabung der Werkzeugs für den Anwender in vorteilhafter Weise erleichtert. Selbstverständlich kann die Ebene, in welcher sich die Endfläche erstreckt, jedoch auch in einem anderen Winkel zum Schaft geneigt sein.

Gemäß einem Ausführungsbeispiel ist eine medizinische, insbesondere dentale, Behandlungsvorrichtung vorgesehen, die ein durch Schall antreibbares, insbesondere dentales, Werkzeug zum Trennen zweier unterschiedlicher Gewebe, bevorzugt zum Trennen einer Membran von einem Knochen, zur Präparation einer Implantationsstelle und eine Schallquelle umfasst, wobei das Werkzeug mit der Schallquelle verbindbar und durch die Schallquelle in Schwingung versetzbar ist. Das durch Schall antreibbare, insbesondere dentale, Werkzeug umfasst insbesondere ein Anschlussteil zur Verbindung des Werkzeugs mit einer Schallquelle und mit einer Flüssigkeitsquelle, einen Arbeitsabschnitt und einen den Anschlussteil mit dem Arbeitsabschnitt verbindenden Schaft, wobei sich eine Flüssigkeitsleitung vom Anschlussteil durch den Schaft bis zu dem Arbeitsabschnitt erstreckt, wobei der Arbeitsabschnitt eine Endfläche und eine mit der Endfläche verbundene Umfangswand aufweist, wobei der Außendurchmesser der Endfläche größer ist als der Außendurchmesser des Schafts, wobei die Endfläche Öffnungen aufweist, die mit der Flüssigkeitsleitung verbunden sind, so dass durch die Flüssigkeitsleitung leitbare Flüssigkeit aus den Öffnungen austreten kann, und wobei die Umfangswand einen stumpfen und gerundeten Außenumfang aufweist, welcher ausgebildet ist, die beiden unterschiedlichen Gewebe mechanisch voneinander zu trennen.

Vorzugsweise umfasst die Schallquelle, insbesondere die Ultraschallquelle, einen elektrisch betreibbaren Schwingungserzeuger, zum Beispiel einen piezokeramischen oder einen magnetostriktiven Schwingungserzeuger. Vorzugsweise ist eine Schwingachse oder Sonotrode vorgesehen, welche die Schall- oder Ultraschallquelle schwingungsübertragend mit dem Werkzeug verbindet. Vorzugsweise ist zumindest eine Teil der Schwingachse oder Sonotrode hohl ausgebildet, insbesondere zur Leitung einer Flüssigkeit. Vorzugsweise sind das Werkzeug und die Schwingachse oder Sonotrode flüssigkeitsübertragend miteinander verbunden.

Vorzugsweise umfasst die Flüssigkeitsquelle eine sterile Flüssigkeit, insbesondere eine physiologische Kochsalzlösung. Vorzugsweise umfasst die Flüssigkeitsquelle eine Pumpe und / oder eine Leitungsvorrichtung, zum Beispiel einen Schlauch oder eine Leitung, zur Verbindung mit dem Werkzeug.

Vorzugsweise umfasst die Behandlungsvorrichtung ein Handstück, das lösbar mit dem Werkzeug verbindbar ist. Vorzugsweise ist in dem Handstück zumindest eines der folgenden Elemente aufgenommen: Zumindest ein Teil der Schallquelle, insbesondere der Ultraschallquelle, die Schwingachse oder Sonotrode, zumindest ein Teil der Flüssigkeitsquelle, insbesondere zumindest einen Teil der Leitungsvorrichtung.

Ein Verfahren zur Herstellung eines durch Schall antreibbaren, insbesondere dentalen, Werkzeugs zum Trennen zweier unterschiedlicher Gewebe, bevorzugt zum Trennen einer Membran von einem Knochen, zur Präparation einer Implantationsstelle ist dadurch definiert, dass aus einem Rohling ein Schaft mit einer Flüssigkeitsleitung und ein Arbeitsabschnitt mit einer Endfläche und einer mit der Endfläche verbundenen Umfangswand derart geformt werden, dass der Außendurchmesser der Endfläche größer ist als der Außendurchmesser des Schafts, dass die Endfläche Öffnungen aufweist, die mit der Flüssigkeitsleitung verbunden sind, und dass die Umfangswand einen stumpfen und abgerundeten Außenumfang aufweist. Vorzugsweise wird der stumpfe und abgerundete Außenumfang der Umfangswand durch Schleifen, insbesondere Gleitschleifen, oder Gleitspanen geformt. Vorzugsweise werden die Flüssigkeitsleitung des Schafts und die Öffnungen der Endfläche mit der Zweigleitung in zwei zeitlich voneinander getrennten Arbeitsschritten geformt.

Ein nicht-erfindungsgemäßes Verfahren zum Trennen zweier unterschiedlicher Gewebe, bevorzugt zum Trennen einer Membran von einem Knochen, zur Präparation einer Implantationsstelle, mit einem durch Schall antreibbaren, insbesondere dentalen, Werkzeug oder mit einer medizinischen, insbesondere dentalen, Behandlungsvorrichtung ist dadurch definiert, dass das Werkzeug durch eine Schallquelle in Schwingung versetzt wird, dass durch die zumindest eine Öffnung der Endfläche des Arbeitsabschnittes Flüssigkeit austritt und dass mit dem stumpfen und gerundeten Außenumfang der Umfangswand des Arbeitsabschnittes die beiden unterschiedlichen Gewebe mechanisch voneinander getrennt werden. Vorzugsweise wird durch die abgegebene Flüssigkeit ein Flüssigkeitsfilm auf der Endfläche und / oder der Behandlungsstelle geschaffen. Vorzugsweise wird das Werkzeug, insbesondere der Arbeitsabschnitt, auf dem Flüssigkeitsfilm bewegt oder gleitet auf dem Flüssigkeitsfilm. Vorzugsweise wird die Trennung der beiden Gewebe durch das in Schwingung Versetzen des Werkzeugs unterstützt.

Die Erfindung wird nachfolgend anhand bevorzugter Ausführungsbeispiele und Bezug nehmend auf die beigefügten Zeichnungen erläutert. Es zeigt die
Figur 1 eine Außenansicht eines Ausführungsbeispiels eines durch Schall antreibbaren, insbesondere dentalen, Werkzeugs zum Trennen zweier unterschiedlicher Gewebe, bevorzugt zum Trennen einer Membran von einem Knochen, zur Präparation einer Implantationsstelle.
Figur 2 einen Längsschnitt durch das Werkzeug der Figur 1.
Figur 3 eine vergrößerte Darstellung des Arbeitsabschnitts des Werkzeugs der Figur 1.
Figur 4 eine medizinische, insbesondere dentale, Behandlungsvorrichtung, mit einem durch Schall antreibbaren, insbesondere dentalen, Werkzeug zum Trennen zweier unterschiedlicher Gewebe, bevorzugt zum Trennen einer Membran von einem Knochen, zur Präparation einer Implantationsstelle.

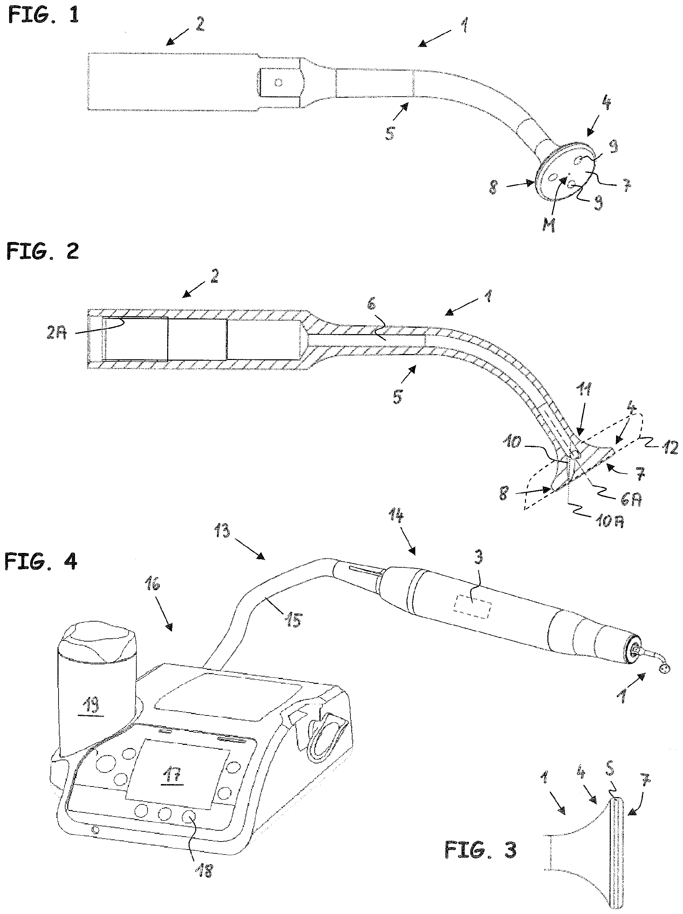

In den Figuren 1 und 2 ist ein durch Schall antreibbares, insbesondere dentales, Werkzeug 1 zum Trennen zweier unterschiedlicher Gewebe, bevorzugt zum Trennen einer Membran von einem Knochen, zur Präparation einer Implantationsstelle, dargestellt. Das Werkzeug 1 umfasst ein Anschlussteil 2 zur Verbindung des Werkzeugs 1 mit einer Schallquelle 3 und mit einer Flüssigkeitsquelle, zum Beispiel ein Verbindungselement 2A, insbesondere ein Gewinde, einen Arbeitsabschnitt 4 und einen den Anschlussteil 2 mit dem Arbeitsabschnitt 4 verbindenden Schaft 5. Eine im Inneren des Werkzeugs 1 angeordnete Flüssigkeitsleitung 6 erstreckt sich durch das Anschlussteil 2 oder von dem Anschlussteil 2, durch den Schaft 5 bis zu dem Arbeitsabschnitt 4. Der Arbeitsabschnitt 4 weist eine runde Endfläche 7 und eine mit der Endfläche 7 verbundene, kreisförmige Umfangswand 8 auf, wobei der Außendurchmesser der Endfläche 7 größer ist als der Außendurchmesser des Schafts 5. An der Endfläche 7 sind mehrere, zum Beispiel drei, Öffnungen 9 vorgesehen, die mit der Flüssigkeitsleitung 6 verbunden sind, so dass eine durch die Flüssigkeitsleitung 6 leitbare Flüssigkeit aus den Öffnungen 9 austreten kann. Die Umfangswand 8 weist einen stumpfen und gerundeten Außenumfang auf, welcher ausgebildet ist, die beiden unterschiedlichen Gewebe mechanisch voneinander zu trennen. Die Endfläche 7 und die Umfangswand 8 sind mit dem Schaft 5 durch einen sich in Richtung des Schafts 5 verjüngenden Verbindungsabschnitt 11 verbunden.

Die an der Endfläche 7 vorgesehenen Öffnungen 9 sind mit der Flüssigkeitsleitung 6 jeweils durch eine Zweigleitung 10 verbunden. Die Zweigleitungen 10 sind gewinkelt zu jenem Abschnitt der Flüssigkeitsleitung 6 oder des Schafts 5 angeordnet, von dem sie sich verzweigen. Dies ist insbesondere in der Figur 2 erkennbar, in der die Mittelachse 10A einer Zweigleitungen 10 und die Mittelachse 6A der Flüssigkeitsleitung 6 oder des an den Arbeitsabschnitt 4 angrenzenden Schaftabschnitts dargestellt sind. Die Öffnungen 9 sind gleichmäßig voneinander beabstandet und im Wesentlichen gleich weit entfernt vom Mittelpunkt M der Endfläche 7 auf einer Kreisbahn um den Mittelpunkt M angeordnet (siehe Figur 1). Die Endfläche 7 erstreckt sich in einer Ebene 12, die im Wesentlichen rechtwinkelig zu zumindest einem Abschnitt des Schafts 5 oder zur Mittelachse 6A angeordnet ist.

Die Umfangswand 8 ist rund ausgebildet. Insbesondere weist sie in radialer Richtung, bezogen auf die Mittelachse 6A, einen runden Außenumfang auf. Besonders bevorzugt weist sie in axialer Richtung, bezogen auf die Mittelachse 6A, einen stumpfen und gerundeten Außenumfang auf. Alternativ weist die Umfangswand 8 in axialer Richtung, bezogen auf die Mittelachse 6A, einen balligen oder konkaven Außenumfang auf, dessen Scheitel S in Richtung der Endfläche 7 und des Schafts 5 abfällt (siehe insbesondere Figur 3).

Die Figur 4 zeigt eine medizinische, insbesondere dentale, Behandlungsvorrichtung 13 mit einem Handstück 14, an dessen Vorderende das Werkzeug 1 mittels einer Werkzeughaltevorrichtung lösbar befestigt ist. In dem Handstück 14 ist eine (Ultra-)Schallquelle 3 vorgesehen, insbesondere eine piezokeramische Ultraschallquelle. Über einen Schlauch oder eine Leitung 15 ist das Handstück 14 mit einer Steuer- und / oder Regelvorrichtung 16 verbunden. Die Steuer- und / oder Regelvorrichtung 16 steuert und / oder regelt zum Beispiel den Betrieb der Schallquelle 3. An der Steuer- und / oder Regelvorrichtung 16 sind bevorzugt eine Anzeige 17 zum Anzeigen betriebsrelevanter Daten oder zumindest ein Stellelement 18 zum Auswählen oder Einstellen von Betriebsparametern vorgesehen. Eine, vorzugsweise an der Steuer- und / oder Regelvorrichtung 16 befestigte, Flüssigkeitsquelle 19 stellt eine, insbesondere sterile, Behandlungsflüssigkeit zur Verfügung. Eine in der Steuer- und / oder Regelvorrichtung 16 vorgesehene Pumpe fördert die Behandlungsflüssigkeit durch den Schlauch 15 und durch eine Flüssigkeitsleitung in dem Handstück 14 in die Flüssigkeitsleitung 6 des Werkzeugs 1.

Die Erfindung ist nicht auf das beschriebene Ausführungsbeispiel beschränkt, sondern umfasst alle Ausführungen, die durch die Ansprüche definiert sind. Des Weiteren sind alle Merkmale aller beschriebenen und dargestellten Ausführungsbeispiele miteinander kombinierbar.

## Patentansprüche

1. Ein durch Schall antreibbares, insbesondere dentales, Werkzeug (1) zum Trennen zweier unterschiedlicher Gewebe, bevorzugt zum Trennen einer Membran von einem Knochen, zur Präparation einer Implantationsstelle, umfassend: Ein Anschlussteil (2) zur Verbindung des Werkzeugs (1) mit einer Schallquelle (3), einen Arbeitsabschnitt (4) und einen den Anschlussteil (2) mit dem Arbeitsabschnitt (4) verbindenden Schaft (5), wobei sich eine Flüssigkeitsleitung (6) durch den Schaft (5) bis zu dem Arbeitsabschnitt (4) erstreckt, wobei der Arbeitsabschnitt (4) eine Endfläche (7) und eine mit der Endfläche (7) verbundene Umfangswand (8) aufweist, wobei der Außendurchmesser der Endfläche (7) größer ist als der Außendurchmesser des Schafts (5), wobei die Endfläche (7) zumindest eine Öffnung (9) aufweist, die mit der Flüssigkeitsleitung (6) verbunden ist, so dass eine durch die Flüssigkeitsleitung (6) leitbare Flüssigkeit aus der Öffnung (9) austreten kann, und wobei die Umfangswand (8) einen stumpfen und gerundeten Außenumfang aufweist, welcher ausgebildet ist, die beiden unterschiedlichen Gewebe mechanisch voneinander zu trennen, wobei das Werkzeug (1) mehrere Öffnungen aufweist, durch welche eine in der Flüssigkeitsleitung (6) leitbare Flüssigkeit austreten kann, **dadurch gekennzeichnet,**
**dass**
ausschließlich die Endfläche (7) diese mehreren Öffnungen (9) aufweist, die mit der Flüssigkeitsleitung (6) jeweils durch eine eigene Zweigleitung (10) verbunden sind.

2. Ein durch Schall antreibbares, insbesondere dentales, Werkzeug (1) nach Anspruch 1,
**dadurch gekennzeichnet, dass**
an dem Werkzeug (1), insbesondere an dem Arbeitsabschnitt (4), keine Schneide, keine Klinge oder kein abrasives Element vorgesehen ist.

3. Ein durch Schall antreibbares, insbesondere dentales, Werkzeug (1) nach Anspruch 1 oder 2, **dadurch gekennzeichnet, dass**
die Zweigleitungen (10) gewinkelt zu jenem Abschnitt der Flüssigkeitsleitung (6) angeordnet sind, von dem sie sich verzweigen.

4. Ein durch Schall antreibbares, insbesondere dentales, Werkzeug (1) nach Anspruch 3,
**dadurch gekennzeichnet, dass**
der Winkel zwischen der Mittelachse (10A) einer Zweigleitung (10) und der Mittelachse (6A) des Abschnitts der Flüssigkeitsleitung (6), von dem sie sich verzweigen, oder des Schafts (5), insbesondere der Mittelachse (6A) des an den Arbeitsabschnitt (4) anschließenden Abschnitts des Schafts (5), in etwa zwischen 15° und 75°, insbesondere zwischen 25° und 50°, besonders bevorzugt in etwa 35° beträgt.

5. Ein durch Schall antreibbares, insbesondere dentales, Werkzeug (1) nach einem der vorstehenden Ansprüche, **dadurch gekennzeichnet, dass**
zumindest eine Öffnung (9) der Endfläche (7) außermittig angeordnet ist.

6. Ein durch Schall antreibbares, insbesondere dentales, Werkzeug (1) nach einem der vorstehenden Ansprüche, **dadurch gekennzeichnet, dass**
zumindest einige der Öffnungen (9) gleichmäßig voneinander beabstandet und / oder im Wesentlichen gleich weit entfernt vom Mittelpunkt (M) der Endfläche (7) angeordnet sind.

7. Ein durch Schall antreibbares, insbesondere dentales, Werkzeug (1) nach einem der vorstehenden Ansprüche, **gekennzeichnet durch**
eine im Wesentlichen runde, insbesondere kreisrunde, Endfläche (7) und / oder eine im Wesentlichen runde, insbesondere kreisrunde, Umfangswand (8).

8. Ein durch Schall antreibbares, insbesondere dentales, Werkzeug (1) nach einem der vorstehenden Ansprüche, **dadurch gekennzeichnet, dass**
die Endfläche (7) und / oder die Umfangswand (8) mit dem Schaft (5) durch einen sich in Richtung des Schafts (5) verjüngenden Verbindungsabschnitt (11) verbunden ist / sind.

9. Ein durch Schall antreibbares, insbesondere dentales, Werkzeug (1) nach einem der vorstehenden Ansprüche, **dadurch gekennzeichnet, dass**
der Außendurchmesser der Umfangswand (8) zumindest gleich groß ist wie der Außendurchmesser der Endfläche (7).

10. Ein durch Schall antreibbares, insbesondere dentales, Werkzeug (1) nach einem der vorstehenden Ansprüche, **dadurch gekennzeichnet, dass**
die Endfläche (7) sich in einer Ebene (12) erstreckt, die im Wesentlichen rechtwinkelig zu zumindest einem Abschnitt des Schafts (5) angeordnet ist.

11. Ein durch Schall antreibbares, insbesondere dentales, Werkzeug (1) nach einem der vorstehenden Ansprüche, **dadurch gekennzeichnet, dass**
die Höhe der Umfangswand (8) geringer als 1,5 mm ist, insbesondere beträgt die Höhe der Umfangswand (8) zwischen 1,2 mm und 0,5 mm.

12. Medizinische, insbesondere dentale, Behandlungsvorrichtung (13), **gekennzeichnet durch**
ein durch Schall antreibbares, insbesondere dentales, Werkzeug (1) zum Trennen zweier unterschiedlicher Gewebe, bevorzugt zum Trennen einer Membran von einem Knochen, zur Präparation einer Implantationsstelle nach einem der vorherstehenden Ansprüche und durch eine Schallquelle (3), wobei das Werkzeug (1) mit der Schallquelle (3) verbindbar und durch die Schallquelle (3) in Schwingung versetzbar ist.

13. Verfahren zur Herstellung eines durch Schall antreibbaren, insbesondere dentalen, Werkzeugs (1) zum Trennen zweier unterschiedlicher Gewebe, bevorzugt zum Trennen einer Membran von einem Knochen, zur Präparation einer Implantationsstelle nach einem der vorherstehenden Ansprüche, wobei aus einem Rohling der Schaft (5) mit der Flüssigkeitsleitung (6) und der Arbeitsabschnitt (4) mit der Endfläche (7) und der mit der Endfläche (7) verbundenen Umfangswand (8) derart geformt werden, dass der Außendurchmesser der Endfläche (7) größer ist als der Außendurchmesser des Schafts (5), wobei das Werkzeug (1) mehreren Öffnungen (9) aufweist, durch welche eine in der Flüssigkeitsleitung (6) leitbare Flüssigkeit austreten kann, wobei ausschließlich die Endfläche (7) diese mehreren Öffnungen (9) aufweist, die mit der Flüssigkeitsleitung (6) jeweils durch eine eigene Zweigleitung (10) verbunden sind, und dass die Umfangswand (8) einen stumpfen und abgerundeten Außenumfang aufweist.

14. Verfahren zur Herstellung eines durch Schall antreibbaren, insbesondere dentalen, Werkzeugs (1) nach Anspruch 13, **dadurch gekennzeichnet, dass**
der stumpfe und abgerundete Außenumfang der Umfangswand (8) durch Schleifen, insbesondere Gleitschleifen, oder Gleitspanen geformt wird.

15. Verfahren zur Herstellung eines durch Schall antreibbaren, insbesondere dentalen, Werkzeugs (1) nach Anspruch 13 oder 14, **dadurch gekennzeichnet, dass**
die Flüssigkeitsleitung (6) des Schafts (5) und zumindest eine Öffnung (9) der Endfläche (7) mit der Zweigleitung (10) in zwei zeitlich voneinander getrennten Arbeitsschritten geformt werden.

## Claims

1. A sonically driven, in particular dental, tool (1) for separating two different tissues, preferably for separating a membrane from a bone, for preparation of an implantation site, comprising: a connecting part (2) for connecting the tool (1) to a sound source (3), a working section (4) and a shaft (5) connecting the connecting part (2) to the working section (4), wherein a liquid line (6) extends through the shaft (5) to the working section (4), wherein the working section (4) comprises an end face (7) and a circumferential wall (8) connected to the end face (7), wherein the outside diameter of the end face (7) is larger than the outside diameter of the shaft (5), wherein the end face (7) comprises at least one opening (9) connected to the liquid line (6), so that a liquid that can be carried through the liquid line (6) can exit from the opening (9), and wherein the circumferential wall (8) comprises a blunt and rounded outside circumference, which is configured to separate the two different tissues from one another mechanically, wherein the tool (1) comprises a plurality of openings through which a liquid that can be carried in the liquid line (6) can exit, **characterized in that** exclusively the end face (7) comprises these multiple openings (9), each of which is connected to the liquid line (6) through a separate branch line (10).

2. A sonically driven, in particular dental, tool (1) according to claim 1, **characterized in that**
no blade, no cutting edge or no abrasive element is provided on the tool (1), in particular on the working edge (4).

3. A sonically driven, in particular dental, tool (1) according to claim 1 or 2, **characterized in that**
the branch lines (10) are arranged at an angle to this section of the liquid line (6) from which they branch off.

4. A sonically driven, in particular dental, tool (1) according to claim 3, **characterized in that**
the angle between the central axis (10A) of a branch line (10) and the central axis (6A) of the section of the liquid line (6), from which they branche off, or of the shaft (5), in particular the central axis (6A) of the section of the shaft (5) connected to the working section (4), amounts to between about 15° and 75°, in particular between 25° and 50°, especially preferably about 35°.

5. A sonically driven, in particular dental, tool (1) according to any one of the preceding claims, **characterized in that**
at least one opening (9) of the end face (7) is arranged eccentrically.

6. A sonically driven, in particular dental, tool (1) according to any one of the preceding claims, **characterized in that**
at least some of the openings (9) are arranged at a uniform distance from one another and/or substantially at the same distance from the midpoint (M) of the end face (7).

7. A sonically driven, in particular dental, tool (1) according to any one of the preceding claims, **characterized by**
an substantially round, in particular circular, end face (7) and/or an substantially round, in particular circular, circumferential wall (8).

8. A sonically driven, in particular dental, tool (1) according to any one of the preceding claims, **characterized in that**
the end face (7) and/or the circumferential wall (8) is/are connected to the shaft (5) by a connecting section (11) tapering in the direction of the shaft (5).

9. A sonically driven, in particular dental, tool (1) according to any one of the preceding claims, **characterized in that**
the outside diameter of the circumferential wall (8) is at least the same size as the outside diameter of the end face (7).

10. A sonically driven, in particular dental, tool (1) according to any one of the preceding claims, **characterized in that**
the end face (7) extends in a plane (12) arranged substantially at a right angle to at least one portion of the shaft (5).

11. A sonically driven, in particular dental, tool (1) according to any one of the preceding claims, **characterized in that**
the height of the circumferential wall (8) is less than 1.5 mm, in particular the height of the circumferential wall (8) being between 1.2 mm and 0.5 mm.

12. A medical, in particular dental, treatment device (13), **characterized by** a sonically driven, in particular dental, tool (1) for separating two different tissues, preferably for separating a membrane from a bone, for preparation of an implantation site according to any one of the preceding claims, and by a sound source (3), wherein the tool (1) can be connected to the sound source (3) and can be induced to vibrate by the sound source (3).

13. A method for producing a sonically driven, in particular dental, tool (1) for separating two different tissues, preferably for separating a membrane from a bone for preparation of an implantation site according to any one of the preceding claims, wherein the shaft (5) with the liquid line (6) and the working section (4) with the end face (7) and the circumferential wall (8) connected to the end face (7) are formed out of a blank, such that the outside diameter of the end face (7) is greater than the outside diameter of the shaft (5), wherein the tool (1) comprises a plurality of openings (9) through which a liquid that can be carried in the liquid line (6) can exit, wherein only the end face (7) comprises this plurality of openings (9), each being connected to the liquid line (6) through its own branch line (10), and that the circumferential wall (8) has a blunt and rounded outside circumference.

14. The method for producing a sonically driven, in particular dental, tool (1) according to claim 13, **characterized in that**
the blunt and rounded outside circumference of the circumferential wall (8) is shaped by grinding, in particular slide grinding or slide machining.

15. The method for producing a sonically driven, in particular dental, tool (1) according to claim 13 or 14, **characterized in that**
the liquid line (6) of the shaft (5) and at least one opening (9) of the end face (7) together with the branch line (10) are shaped in two chronologically separate working steps.

## Revendications

1. Instrument sonique (1), en particulier dentaire, pour séparer deux tissus différents, de préférence pour séparer une membrane d'un os, pour la préparation d'un point d'implantation, comprenant: une partie de connexion (2) pour la connexion de l'instrument (1) à une source sonore (3), une partie de travail (4) et une tige (5) reliant la partie de connexion (2) à la partie de travail (4), dans lequel une conduite de liquide (6) s'étend à travers la tige (5) jusqu'à la partie de travail (4), dans lequel la partie de travail (4) présente une surface d'extrémité (7) et une paroi périphérique (8) reliée à la surface d'extrémité (7), dans lequel le diamètre extérieur de la surface d'extrémité (7) est supérieur au diamètre extérieur de la tige (5), dans lequel la surface d'extrémité (7) présente au moins une ouverture (9) reliée à la conduite de liquide (6) de sorte qu'un liquide pouvant être conduit avec la conduite de liquide (6) peut sortir par l'ouverture (9), et dans lequel la paroi périphérique (8) présente une périphérie extérieure arrondie et émoussée, laquelle est réalisée pour séparer mécaniquement l'un de l'autre les deux tissus différents, dans lequel l'instrument (1) présente plusieurs ouvertures à travers lesquelles un liquide pouvant être conduit dans la conduite de liquide (6) peut sortir, **caractérisé en ce**
**qu'**exclusivement la surface d'extrémité (7) présente ces plusieurs ouvertures (9) qui sont reliées à la conduite de liquide (6) respectivement par une conduite de ramification (10) propre.

2. Instrument sonique (1), en particulier dentaire selon la revendication 1, **caractérisé en ce**
**que**, sur l'instrument (1), en particulier sur la partie de travail (4), on ne prévoit aucun tranchant, aucune lame ou aucun élément abrasif.

3. Instrument sonique (1), en particulier dentaire selon la revendication 1 ou 2, **caractérisé en ce**
**que** les conduites de ramification (10) sont disposées en angle par rapport à cette partie de la conduite de liquide (6) à partir de laquelle elles se ramifient.

4. Instrument sonique (1), en particulier dentaire selon la revendication 3, **caractérisé en ce**
**que** l'angle entre l'axe médian (10A) d'une conduite de ramification (10) et l'axe médian (6A) de la partie de la conduite de liquide (6), à partir de laquelle se ramifient, ou de la tige (5), en particulier de l'axe médian (6A) de la partie de la tige (5) en jonction avec la partie de travail (4), est compris entre près de 15° et 75°, en particulier entre 25° et 50°, en étant de manière particulièrement préférée de près de 35°.

5. Instrument sonique (1), en particulier dentaire selon l'une des revendications précédentes, **caractérisé en ce**
**qu'**au moins une ouverture (9) de la surface d'extrémité (7) est disposée de manière excentrée.

6. Instrument sonique (1), en particulier dentaire selon l'une des revendications précédentes, **caractérisé en ce**
**qu'**au moins certaines des ouvertures (9) sont disposées de manière régulièrement espacée les unes des autres et/ou sensiblement de façon éloignée de la même distance par rapport au point médian (M) de la surface d'extrémité (7).

7. Instrument sonique (1), en particulier dentaire selon l'une des revendications précédentes, **caractérisé par**
une surface d'extrémité (7) sensiblement ronde, en particulier circulaire et/ou une paroi périphérique (8) sensiblement ronde, en particulier circulaire.

8. Instrument sonique (1), en particulier dentaire selon l'une des revendications précédentes, **caractérisé en ce**
**que** les surfaces d'extrémité (7) et/ou la paroi périphérique (8) est/sont reliée(s) avec la tige (5) par une partie de raccordement (11) s'amenuisant en direction de la tige (5).

9. Instrument sonique (1), en particulier dentaire selon l'une des revendications précédentes, **caractérisé en ce**
**que** le diamètre extérieur de la paroi périphérique (8) est au moins aussi grand que le diamètre extérieur de la surface d'extrémité (7).

10. Instrument sonique (1), en particulier dentaire selon l'une des revendications précédentes, **caractérisé en ce**
**que** la surface d'extrémité (7) s'étend dans un plan (12) qui est sensiblement disposé en angle droit par rapport à au moins une partie de la tige (5).

11. Instrument sonique (1), en particulier dentaire selon l'une des revendications précédentes, **caractérisé en ce**
**que** la hauteur de la paroi périphérique (8) est inférieure à 1,5 mm, la hauteur de la paroi périphérique (8) étant en particulier comprise entre 1,2 mm et 0,5 mm.

12. Dispositif de traitement médical (13), en particulier dentaire, **caractérisé par** un instrument sonique (1), en particulier dentaire, pour séparer deux tissus différents, de préférence pour séparer une membrane d'un os, pour la préparation d'un point d'implantation selon l'une des revendications précédentes, et par une source sonore (3), dans lequel l'instrument (1) peut être relié à la source sonore (3) et peut se mettre à vibrer grâce à la source sonore (3).

13. Procédé pour la fabrication d'un instrument sonique (1), en particulier dentaire pour séparer deux tissus différents, de préférence pour séparer une membrane d'un os, pour la préparation d'un point d'implantation selon l'une des revendications précédentes, dans lequel on forme, à partir d'une ébauche, la tige (5) avec la conduite de liquide (6) et la partie de travail (4) avec la surface d'extrémité (7) et la paroi périphérique (8) reliée à la surface d'extrémité (7) de manière à ce que le diamètre extérieur de la surface d'extrémité (7) est supérieur au diamètre extérieur de la tige (5), dans lequel l'instrument (1) présente plusieurs ouvertures (9) à travers lesquelles un liquide pouvant être conduit dans la conduite de liquide (6) peut sortir, dans lequel exclusivement la surface d'extrémité (7) présente ces plusieurs ouvertures (9) reliées à la conduite de liquide (6) respectivement grâce à une conduite de ramification (10) propre, et que la paroi périphérique (8) présente une périphérie extérieure arrondie et émoussée.

14. Procédé pour la fabrication d'un instrument sonique (1), en particulier dentaire, selon la revendication 13, **caractérisé en ce**
**que** la périphérie extérieure arrondie et émoussée de la paroi périphérique (8) est formée par affûtage, en particulier tribofinition ou roulage au tonneau.

15. Procédé pour la fabrication d'un instrument sonique (1), en particulier dentaire selon la revendication 13 ou 14, **caractérisé en ce**
**que** la conduite de liquide (6) de la tige (5) et au moins une ouverture (9) de la surface d'extrémité (7) avec la conduite de ramification (10) sont formées en deux étapes de travail chronologiquement séparées l'une de l'autre.
